# EUROPÄISCHE PATENTSCHRIFT

(11) **EP 3 169 163 B1**
(45) Veröffentlichungstag und Bekanntmachung des Hinweises auf die Patenterteilung: **06.12.2017**
(21) Anmeldenummer: 15744504.0
(22) Anmeldetag: 10.07.2015
(51) Int. Cl.: A23C 19/16, C08F 218/10, C09D 131/02, A23P 20/00, C08F 220/10, C08F 220/18, C08F 220/56, C08L 33/06

(54) **FETTSÄUREVINYLESTER-COPOLYMERE MIT WACHSEIGENSCHAFTEN**
FATTY ACID VINYL ESTER COPOLYMERS WITH WAX QUALITIES
COPOLYMÈRES D'ESTER VINYLIQUE D'ACIDES GRAS AVEC PROPRIÉTÉS DE CIRE

(30) Priorität: 14.07.2014 DE 102014213657
(43) Veröffentlichungstag der Anmeldung: 24.05.2017
(73) Patentinhaber: Wacker Chemie AG, 81737 München (DE)
(72) Erfinder: BRUCKMEIER, Christian, 80805 München (DE); MOSER, Barbara, 82131 Gauting (DE); BAREUTHER, Marina, 83544 Albaching (DE)
(74) Vertreter: Ege, Markus
(86) Internationale Anmeldenummer: PCT/EP2015/065915
(87) Internationale Veröffentlichungsnummer: WO 2016/008829

(56) Entgegenhaltungen:
- EP-A1- 1 541 600
- WO-A1-03/054041
- US-A1- 2013 156 901

## Beschreibung

Die Erfindung betrifft Verfahren zur Herstellung von Fettsäurevinylester-Copolymeren, die so erhältlichen Fettsäurevinylester-Copolymere und Copolymer-Zusammensetzungen sowie deren Verwendung in Beschichtungsmitteln, insbesondere zur Herstellung von Lebensmittelbeschichtungen, oder in Kaugummirohmassen oder im Kosmetik-Bereich.

Seit einigen Jahren besteht ein zunehmender Trend, herkömmliche petrochemische Polymere durch Produkte auf Basis nachwachsender Ressourcen zu ersetzen. Die Substitution von Paraffin-Wachsen durch Fettsäurevinylester-Copolymere ist hierfür ein Beispiel. Voraussetzung ist allerdings, dass die anwendungstechnischen Eigenschaften von Paraffin-Wachsen erreicht werden. So müssen die Copolymere die für die Verarbeitung erforderliche Schmelzbarkeit aufweisen und daraus hergestellte Beschichtungen dürfen nicht klebrig oder spröde sein, sondern müssen wachsartige Eigenschaften mit einem flachen Temperatur-Härte Profil zeigen.

Die bisher bekannten Fettsäurevinylester-Copolymere werden diesem Anforderungsprofil nicht hinreichend gerecht. Herkömmliche Copolymere mit statistischer Verteilung der unterschiedlichen Vinylester-Einheiten in den Polymerketten weisen einen scharfen Schmelzpunkt auf und sind oberhalb dieses Schmelzpunkts teilweise flüssig bis zähflüssig, unterhalb dieses Schmelzpunkts jedoch hart und spröde und können daher nicht mit den Wachseigenschaften von Paraffinwachsen konkurrieren. Beispiele für solche statistischen Copolymere von Vinylestern langkettiger Carbonsäuren und Vinylestern kurzkettiger Carbonsäuren sind in der US 2600384 beschrieben.

Um die gewünschte Weichheit und Plastizität von Wachsformulierungen einzustellen, werden in herkömmlichen Ansätzen zwei Homopolymere unterschiedlicher Fettsäurevinylester und gegebenenfalls zusätzliche Kohäsionspolymere zu einem wachsartigen Beschichtungsmittel abgemischt. Solche Zubereitungen neigen im Lauf der Zeit allerdings zur Entmischung der unterschiedlichen Polymere und zu einer Versprödung der Beschichtung. Versprödete Beschichtungen haben nicht mehr die gewünschten wachsartigen Eigenschaften. Ein etwaiger Zusatz von weichen Polymeren, der der Versprödung entgegenwirken soll, steigert das Entmischungsproblem noch und kann zudem zu Beschichtungen mit klebrigen Oberflächen führen.

Zur Behebung solcher Probleme mit Wachsbeschichtungen für Lebensmittel empfiehlt die US 2013/0156901 Blockcopolymere aus langkettigen und kurzkettigen Vinylsäureestern. Aber auch die darin beschriebenen Copolymere können hinsichtlich der elastischen und wachsartigen Eigenschaften der damit erhältlichen Beschichtungen und der Temperaturunabhängigkeit des Eigenschaftsprofils der Produkte noch nicht voll befriedigen. Beispielsweise kann auch hier eine Aggregation bzw. Überstrukturbildung unterschiedlicher Polymerphasen erfolgen und eine Versprödung mit Verlust an wachsartigen Eigenschaften entsprechender Beschichtungen auftreten. Zudem ist es aufwändig, Blockcopolymere mittels sogenannter lebender Polymerisation herzustellen, beispielsweise durch Controlled Radical Polymerization (CRP), wie Reversible Addition-Fragmentation Chain Transfer (RAFT) oder Transfer Radical Polymerization (ATRP). Dies gilt insbesondere bei der Polymerisation von Vinylestern langkettiger Carbonsäuren und Vinylestern kurzkettiger Carbonsäuren.

Es bestand daher die Aufgabe, Fettsäurevinylester-Copolymere mit Wachseigenschaften zur Verfügung zu stellen, bei denen ein oder mehrere der oben genannten Nachteile zumindest reduziert oder sogar ganz unterbunden werden können.

Die Aufgabe wurde überraschenderweise dadurch gelöst, dass bei der Herstellung der Fettsäurevinylester-Copolymere mittels Polymerisation mindestens ein Vinylester a) von Carbonsäuren mit 16 bis 22 Kohlenstoffatomen und mindestens ein Vinylester b) von Carbonsäuren mit 2 bis 15 Kohlenstoffatomen während der Polymerisation in ganz bestimmter Weise zudosiert wurden. Die Dosierraten der Vinylester a) und b) wurden während der Polymerisation gegenläufig verändert; d.h. es wurde entweder die Dosierrate von Vinylester a) oder die Dosierrate von Vinylester b) während der Polymerisation gesteigert, und die Dosierrate des anderen Vinylesters wurde während der Polymerisation reduziert. Auf diese Weise wurden spezielle Gradientencopolymere erhalten, die auf Grund dieses Dosierungsschemas weder die Strukturmerkmale von Blockcopolymeren noch von herkömmlichen statistischen Copolymeren aufweisen.

Gegenstand der Erfindung sind Verfahren zur Herstellung von Fettsäurevinylester-Copolymeren durch radikalisch initiierte Polymerisation von
a) einem oder mehreren Vinylestern von Carbonsäuren mit 16 bis 22 Kohlenstoffatomen und
b) einem oder mehreren Vinylestern von Carbonsäuren mit 2 bis 15 Kohlenstoffatomen,
wobei ein oder mehrere Vinylester a) und ein oder mehrere Vinylester b) während der Polymerisation zudosiert werden, dadurch gekennzeichnet, dass
während der Polymerisation entweder die Dosierrate von Vinylester a) oder die Dosierrate von Vinylester b) verringert und die Dosierrate des anderen der beiden Vinylester a) oder b) erhöht wird.

Ein weiterer Gegenstand der Erfindung sind Fettsäurevinylester-Copolymere, die nach dem vorgenannten Verfahren erhältlich sind.

Vinylester können formal auch als Carbonsäureester von Vinylalkohol bezeichnet werden und tragen dementsprechend einen Carbonsäurerest. Die Carbonsäurereste können verzweigt sein, sind aber bevorzugt unverzweigt. Die Anzahl der Kohlenstoffatome der Carbonsäurereste ist bevorzugt geradzahlig. Die Carbonsäurereste sind vorzugsweise gesättigt. Die Carbonsäurereste tragen also vorzugsweise keine ethylenisch ungesättigte Gruppe. In den Vinylestern a) und Vinylestern b) können die jeweiligen Carbonsäurereste die vorgenannten Bedeutungen unabhängig voneinander annehmen. Die vorgenannten Carbonsäurereste wirken sich vorteilhaft auf die Wachseigenschaften der erfindungsgemäßen Fettsäurevinylester-Copolymere aus.

Bevorzugt sind Vinylester a) von Carbonsäuren mit 16 bis 18 Kohlenstoffatomen. Beispiele für Carbonsäuren der Vinylester a) sind Palmitinsäure, Stearinsäure, Margarinsäure, Arachinsäure oder Behensäure. Bevorzugt sind Palmitinsäure und Stearinsäure. Bevorzugt sind auch Comonomergemische von Vinylestern a) umfassend Vinylpalmitat und Vinylstearat.

Die Vinylester a) werden vorzugsweise zu 20 bis 90 Gew.-%, besonders bevorzugt 40 bis 80 Gew.-% und am meisten bevorzugt 60 bis 80 Gew.-% eingesetzt, jeweils bezogen auf die Gesamtmasse der insgesamt zur Herstellung der Fettsäurevinylester-Copolymere eingesetzten ethylenisch ungesättigten Monomere.

Als Vinylester b) sind Vinylester von Carbonsäuren mit 2 bis 14 Kohlenstoffatomen bevorzugt. Besonders bevorzugt sind Vinylester b) von Carbonsäuren mit 2 bis 9 Kohlenstoffatomen, insbesondere 2 bis 5 Kohlenstoffatomen. Besonders bevorzugt sind auch Vinylester b) von Carbonsäuren mit 10 bis 14 Kohlenstoffatomen, insbesondere 10 bis 12 Kohlenstoffatomen.

Beispiele für Vinylester b) sind Vinylacetat, Vinylpropionat, Vinylbutyrat, 1-Methylvinylacetat, Vinylpivalat, Vinyllaurat, Vinylneodecanoat, Vinylester von α-verzweigten Monocarbonsäuren mit 9 bis 11 C-Atomen, wie VeoVa9^{R} oder VeoVa10^{R} (beides Handelsnamen der Firma Momentive). Bevorzugte Vinylester b) sind Vinylpropionat, Vinylbutyrat, VeoVa9^{R} und insbesondere Vinylacetat. Bevorzugte Vinylester b) sind auch VeoVa10^{R} und insbesondere Vinyllaurat. Besonders bevorzugt sind Vinylacetat und insbesondere Vinyllaurat.

Bevorzugt sind auch Comonomergemische von Vinylestern b) umfassend Vinylacetat und ein oder mehrere weitere Vinylester b) von Carbonsäuren mit 9 bis 14 Kohlenstoffatomen, insbesondere 10 bis 12 Kohlenstoffatomen. Besonders bevorzugte Comonomergemische von Vinylestern b) enthalten Vinylacetat und Vinyllaurat. Der Anteil von Vinylacetat in solchen Comonomergemischen beträgt vorzugsweise ≤ 50 Gew.-%, besonders bevorzugt ≤ 30 Gew.-% und am meisten bevorzugt ≤ 10 Gew.-%, je bezogen auf das Gesamtgewicht der Vinylester b). Auf diese Weise kann beispielsweise die Verträglichkeit der Fettsäurevinylester-Copolymere mit den weiteren Bestandteilen der Anwendungsformulierung gesteuert werden.

Die Vinylester b) werden vorzugsweise zu 10 bis 80 Gew.-%, besonders bevorzugt 20 bis 60 Gew.-% und am meisten bevorzugt 20 bis 40 Gew.-% eingesetzt, jeweils bezogen auf die Gesamtmasse der insgesamt zur Herstellung der Fettsäurevinylester-Copolymere eingesetzten ethylenisch ungesättigten Monomere.

Zur Herstellung der Fettsäurevinylester-Copolymere können ein oder mehrere weitere ethylenisch ungesättigte Monomere eingesetzt werden. Weitere ethylenisch ungesättigte Monomere können beispielsweise ausgewählt werden aus der Gruppe umfassend Acrylsäureester und Methacrylsäureester von unverzweigten oder verzweigten Alkoholen mit 1 bis 15 C-Atomen, Vinylaromaten, Vinylhalogenide, Olefine und Diene.

Beispiele für Acrylsäureester oder Methacrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat, Isobornylacrylat und Stearylacrylat. Bevorzugte Acrylsäureester oder Methacrylsäureester sind Methylacrylat, Methylmethacrylat, n-, iso- und t-Butylacrylat, 2-Ethylhexylacrylat und Isobornylacrylat. Als Vinylaromaten können Styrol oder Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Beispiele für Olefine sind Ethen und Propen; ein geeignetes Dien ist beispielsweise Butadien.
Die weiteren ethylenisch ungesättigten Monomere werden vorzugsweise zu 1 bis 15 Gew.-% und besonders bevorzugt 1 bis 5 Gew.-% eingesetzt, je bezogen auf die Gesamtmasse der insgesamt zur Herstellung der Fettsäurevinylester-Copolymere eingesetzten ethylenisch ungesättigten Monomere. Am meisten bevorzugt werden keine weiteren ethylenisch ungesättigten Monomere eingesetzt.

Gegebenenfalls können noch 0,05 bis 10 Gew.-%, bezogen auf das Gesamtgewicht der ethylenisch ungesättigten Monomere, Hilfsmonomere copolymerisiert werden. Vorzugsweise werden keine Hilfsmonomere copolymerisiert. Beispiele für Hilfsmonomere sind ethylenisch ungesättigte Mono- und Dicarbonsäuren, vorzugsweise ethylenisch ungesättigte Carbonsäuren, wie Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypro-pyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Herstellung der Fettsäurevinylester-Copolymere erfolgt vorzugsweise nach dem Masse- und besonders bevorzugt nach dem Lösungspolymerisations-Verfahren.

Geeignete organische Lösungsmittel sind beispielsweise Aldehyde, wie Acetaldehyd, Propionaldehyd und Butyraldehyd; Ketone, wie Aceton oder Methylethylketon; Ester, wie Methylacetat, Ethylacetat und Butylacetat; oder Alkohole, wie Methanol, Ethanol, Propanol, Isopropanol. Bevorzugt sind einwertige, aliphatische Alkohole mit 1 bis 6 C-Atomen. Besonders bevorzugt werden Methanol, Ethanol und insbesondere Isopropanol. Die organischen Lösungsmittel haben vorzugsweise einen Siedepunkt im Bereich von 60 bis 100°C (bestimmt bei einem Druck von 1013 mbar). Gegebenenfalls kann auch Wasser oder ein Gemisch aus Wasser und einem oder mehreren organischen Lösungsmitteln eingesetzt werden. Der Anteil von Wasser ist bevorzugt ≤ 5 Gew.-%, bezogen auf das Gesamtgewicht der Lösungsmittel. Besonders bevorzugt wird kein Wasser als Lösungsmittel zugesetzt.

Die Polymerisation wird im Allgemeinen unter Rückflussbedingungen, vorzugsweise bei einer Polymerisationstemperatur von 40°C bis 160°C, besonders bevorzugt bei 40°C bis 100°C durchgeführt. Dies kann wie üblich bei Normaldruck, Überdruck oder Unterdruck erfolgen. Bei der Copolymerisation von gasförmigen Comonomeren, wie Ethylen, wird vorzugsweise bei höheren Drücken, im Allgemeinen bei 5 bis 150 bar gearbeitet. Wenn die Reaktion unter Normaldruck durchgeführt wird, ist es von Vorteil, am Ende der Reaktion einen leichten Überdruck auf das Reaktionssystem zu geben, vorzugsweise 0,5 bis 3 bar, um dem System von außen Energie zuführen zu können, um so einen möglichst hohe Temperatur und einen hohem Umsatz zu erreichen, und um das Abdestillieren des restlichen Monomeren und des Lösungsmittels möglicht effektiv zu gestalten.

Als Initiatoren werden vorzugsweise organische Peroxide oder Azoverbindungen verwendet. Geeignet sind beispielsweise Diacylperoxide wie Dilauroylperoxid, Peroxoester wie t-Butylperoxopivalat oder t-Butylperoxo-2-ethylhexanoat, oder Peroxodicarbonate wie Diethylperoxodicarbonat. Die Initiatormenge beträgt im Allgemeinen von 0,01 bis 5,0 Gew.-%, bezogen auf das Gesamtgewicht der Monomere. Die Initiatoren können sowohl vorgelegt als auch dosiert werden. Dabei hat es sich bewährt, einen Teil der benötigten Initiatormenge vorzulegen und den Rest kontinuierlich während der Polymerisation zu dosieren.

Die Polymerisation kann auch in Gegenwart von Schutzkolloiden und/oder Emulgatoren erfolgen. Schutzkolloide und/oder Emulgatoren werden vorzugsweise in Mengen von ≤ 5 Gew.-%, insbesondere ≤ 0,5 Gew.-% eingesetzt, bezogen auf die insgesamt eingesetzten Mengen an ethylenisch ungesättigten Monomeren. Besonders bevorzugt wird in Abwesenheit von Schutzkolloiden polymerisiert. Besonders bevorzugt ist es auch, in Abwesenheit von Emulgatoren zu polymerisieren. Dies ist vorteilhaft zur Lösung der erfindungsgemäßen Aufgabe.

Beispiele für Schutzkolloide sind Polyvinylalkohole; Polyvinylpyrrolidone; Polyvinylacetale; Polysaccharide; Proteine; Ligninsulfonate; synthetische Polymere, wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Beispiele für Emulgatoren sind anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside, wie Alkylpolyglykolether oder Alkylarylpolyglykolether mit 8 bis 40 Ethylenoxid-Einheiten.

Zur Herstellung der Fettsäurevinylester-Copolymere kann beispielsweise nach einem Semi-Batch-Verfahren gearbeitet werden, wobei einzelne oder mehrere Komponenten vorgelegt werden und der Rest zudosiert wird, oder eine kontinuierliche Polymerisation durchgeführt werden, wobei die Komponenten während der Polymerisation zudosiert werden. Die Dosierungen können gegebenenfalls separat (räumlich und zeitlich) durchgeführt werden.

Erfindungswesentlich ist, dass ein oder mehrere Vinylester a) und ein oder mehrere Vinylester b) während der Polymerisation zudosiert werden, wobei während der Polymerisation entweder die Dosierrate von Vinylester a) oder die Dosierrate von Vinylester b) verringert wird und die Dosierrate des anderen der beiden Vinylester a) oder b) erhöht wird.

Der Ausdruck während der Polymerisation bezeichnet generell einen Zeitraum, währenddessen die Polymerisation von ethylenisch ungesättigten Monomeren, insbesondere Vinylestern a) oder Vinylestern b) erfolgt. Die Polymerisation beginnt im Allgemeinen nach oder mit dem Einsetzen von Initiatoren und ethylenisch ungesättigten Monomeren. Der Beginn der Polymerisation ist bekanntermaßen an der Erwärmung des Polymerisationsansatzes erkennbar, die auf Grund der Exothermie der Polymerisationsreaktion auftritt. Am Ende der Polymerisation werden im Allgemeinen keine oder im Wesentlichen keine ethylenisch ungesättigten Monomere, insbesondere keine Vinylester a) oder b) mehr polymerisiert. Am Ende der Polymerisation beträgt die Menge der nicht polymerisierten ethylenisch ungesättigten Monomere, insbesondere der nicht polymerisierten Vinylester a) und b) ≤ 10 Gew.-%, besonders bevorzugt ≤ 5 Gew.-%, noch mehr bevorzugt ≤ 3 Gew.-% und am meisten bevorzugt ≤ 1 Gew.-%, je bezogen auf das Gesamtgewicht der insgesamt eingesetzten Monomere, insbesondere der insgesamt eingesetzten Vinylester a) und b).

Das Zudosieren der Vinylester a) und/oder Vinylester b) kann hierbei in mehreren Zugabeschritten oder vorzugsweise kontinuierlich, d.h. ohne Unterbrechung, erfolgen. Alternativ kann das kontinuierliche Dosieren von Vinylester a) und/oder Vinylester b) auch unterbrochen und zu einem späteren Zeitpunkt wieder fortgesetzt werden. Alternativ ist es auch möglich, Teilmengen der Vinylester a) und/oder Teilmengen der Vinylester b) kontinuierlich zu dosieren und die restlichen Mengen an Vinylester a) und/oder Vinylester b) in ein oder mehreren Schritten zu dosieren.

Die Dosierrate bezeichnet, wie üblich, die in einem Zeitraum während der Polymerisation zugegebene Menge eines Vinylesters.

Im erfindungsgemäßen Verfahren wird während der Polymerisation die Zugabemenge eines der beiden Vinylester a) und Vinylester b) reduziert. Während der Polymerisation werden entweder Vinylester a) oder Vinylester b) mit einem abnehmenden Gradienten zudosiert. Der andere der beiden Vinylester a) und b) wird mit einem zunehmenden Gradienten zudosiert. Die Vinylester a) und die Vinylester b) werden während der Polymerisation mit entgegengesetzten Gradienten bzw. gegenläufigen Dosierraten oder Zugabemengen pro Zeiteinheit zudosiert. Besonders bevorzugt werden die Vinylester a) mit einem abnehmenden Gradienten und die Vinylester b) mit einem zunehmenden Gradienten während der Polymerisation zudosiert. Die Dosierrate von Vinylester a) wird während der Polymerisation vorzugsweise verringert, besonders bevorzugt stetig oder kontinuierlich verringert. Die Dosierrate von Vinylester b) wird während der Polymerisation vorzugsweise erhöht, besonders bevorzugt stetig oder kontinuierlich erhöht. Alternativ kann die Dosierrate von Vinylester a) während der Polymerisation verringert, bevorzugt stetig oder kontinuierlich verringert werden. Die Dosierrate von Vinylester b) kann alternativ während der Polymerisation auch erhöht, besonders stetig oder kontinuierlich erhöht werden.

Zu Beginn der Polymerisation kann beispielsweise eine größere Menge an Vinylester b) als an Vinylester a) zudosiert werden. Vorzugsweise wird zu Beginn der Polymerisation eine größere Menge an Vinylester a) als an Vinylester b) zudosiert.

Der Vinylester a) oder b), dessen Dosierrate während der Polymerisation verringert wird, wird auch als Vinylester V1) bezeichnet. Der Vinylester a) oder b), dessen Dosierrate während der Polymerisation erhöht wird, wird auch als Vinylester V2) bezeichnet. Der Vinylester a) ist vorzugsweise Vinylester V1). Der Vinylester b) ist vorzugsweise Vinylester V2).

Vorzugsweise werden 15 bis 50 Gew.-%, besonders bevorzugt 15 bis 30 Gew.-% der insgesamt eingesetzten Vinylester V1) bis zu dem Zeitpunkt zudosiert, zu dem 1 bis 10 Gew.-% der insgesamt eingesetzten Vinylester V2) zudosiert sind. Vorzugsweise werden 30 bis 70 Gew.-%, besonders bevorzugt 35 bis 50 Gew.-% der insgesamt eingesetzten Vinylester V1) bis zu dem Zeitpunkt zudosiert, zu dem 20 bis 30 Gew.-% insgesamt eingesetzten Vinylester V2) zudosiert sind. Vorzugsweise werden 40 bis 80 Gew.-%, besonders bevorzugt 50 bis 60 Gew.-% der insgesamt eingesetzten Vinylester V1) bis zu dem Zeitpunkt zudosiert, zu dem 40 bis 60 Gew.-% insgesamt eingesetzten Vinylester V2) zudosiert sind. Vorzugsweise werden 50 bis 80 Gew.-%, besonders bevorzugt 55 bis 70 Gew.-% der insgesamt eingesetzten Vinylester V1) bis zu dem Zeitpunkt zudosiert, zu dem 60 bis 70 Gew.-% der insgesamt eingesetzten Vinylester V2) zudosiert sind.

Die Vinylester a) und die Vinylester b) können ganz oder teilweise zeitlich gemeinsam zudosiert werden, gegebenenfalls räumlich gemeinsam, vorzugsweise räumlich getrennt. Vorzugsweise werden 70 bis 100 Gew.-%, besonders bevorzugt 80 bis 100 Gew.-% der insgesamt eingesetzten Vinylester V1) zudosiert, während Vinylester V2) zudosiert werden. Vorzugsweise werden 80 bis 100 Gew.-%, besonders bevorzugt 70 bis 100 Gew.-% der insgesamt eingesetzten Vinylester V2) zudosiert, während Vinylester V1) zudosiert werden.

Es können auch ein oder mehrere Vinylester a) und/oder ein oder mehrere Vinylester b) vorgelegt werden. Vorzugsweise wird ein solcher Vinylester vorgelegt, der zu Beginn der Polymerisation mit der größeren Dosierrate zudosiert wird. Vorzugsweise wird Vinylester a) vorgelegt. Der Anteil der vorgelegten Vinylester V1) beträgt vorzugsweise 0 bis 30 Gew.-%, insbesondere 0 bis 20 Gew.-%, bezogen auf das Gesamtgewicht der insgesamt eingesetzten Vinylester V1). Der Anteil der vorgelegten Vinylester V2) beträgt vorzugsweise 0 bis 30 Gew.-%, bezogen auf das Gesamtgewicht der insgesamt eingesetzten Vinylester V2). Vorzugsweise wird kein Vinylester V2) vorgelegt. Besonders bevorzugt wird keiner der beiden Vinylester a) und b) vorgelegt.

Nach Abschluss der Polymerisation können Restmonomere und gegebenenfalls Lösungsmittel destillativ nach an sich bekannten Verfahren entfernt werden. Hierzu kann die Innentemperatur beispielsweise bis auf 100°C bis 200°C erhöht und anschließend ein Vakuum angelegt werden.

Vorzugsweise wird nach Abschluss der Polymerisation noch eine Nachpolymerisation durchgeführt. Bei der Nachpolymerisation werden verbliebene Mengen an Restmonomer polymerisiert. Die Nachpolymerisation erfolgt in Anwendung bekannter Methoden, im Allgemeinen mit Redoxkatalysator initiierter Nachpolymerisation.

Flüchtige Verbindungen, wie Restmonomer oder Verunreinigungen durch Initiatorkomponenten oder andere Rohstoffe, können auch mittels Destillation oder Strippen entfernt werden. Beim Strippen werden, gegebenenfalls unter reduziertem Druck, unter Durchleiten oder Überleiten von inerten Schleppgasen, wie Luft, Stickstoff oder Wasserdampf, flüchtige Verbindungen aus den Dispersionen entfernt.

Die Fettsäurevinylester-Copolymere sind in Folge ihrer erfindungsgemäßen Herstellung, insbesondere der erfindungsgemäßen Dosierung der Vinylester a) und b), durch spezifische Strukturmerkmale charakterisiert. Die Fettsäurevinylester-Copolymere sind vorzugsweise Gradientenpolymere. In den Polymerketten von Fettsäurevinylester-Copolymeren besteht also vorzugsweise ein Gradient in der Verteilung der Einheiten von Vinylestern a) und b) über die Polymerketten. Auf Grund ihrer inhärenten Strukturmerkmale sind die erfindungsgemäßen Fettsäurevinylester-Copolymere im Allgemeinen keine Blockcopolymere. Die Fettsäurevinylester-Copolymere können als statistische Polymere beschrieben werden mit spezieller Anordnung bzw. spezieller Anreicherung der unterschiedlichen Vinylester-Einheiten über die Polymerketten. Der Vinylester, der zum jeweiligen Zeitpunkt in höherer Dosierrate zugegeben wird, wird zu diesem Zeitpunkt bevorzugt in die gerade wachsende Polymerkette eingebaut. Die abnehmende Dosierung des einen Vinylesters bzw. zunehmende Dosierrate des anderen Vinylesters verschiebt entsprechend diese Präferenz des Monomereinbaus während der Polymerisation zugunsten des Vinylesters mit zunehmender Dosierrate.

Die Fettsäurevinylester-Copolymere sind vorzugsweise teilkristallin. Teilkristallin bedeutet, dass nur Teile der Polymerketten der Fettsäurevinylester-Copolymere in kristalliner Form vorliegen.

Der Congealing Point (Immobilisierungspunkt) der Fettsäurevinylester-Copolymere beträgt vorzugsweise ≥ 20°C, besonders bevorzugt 30°C bis 80°C und am meisten bevorzugt 40°C bis 75°C (Bestimmung gemäß ASTM D938-12).

Der Schmelzpunkt der Fettsäurevinylester-Copolymere beträgt vorzugsweise ≥ 0°C, besonders bevorzugt 10°C bis 50°C und am meisten bevorzugt 15°C bis 45°C (Bestimmung mittels Dynamischer Differenz Thermoanalyse (DSC) gemäß DIN EN ISO 11357-3 mit dem Gerät DSC 1 von Mettler-Toledo, Modul-Typ: DSC1/500 (Modulname: DSC1_1448)).

Wie üblich wird als Schmelzpunkt das Maximum der Schmelzpunktsverteilungskurve und bei Vorliegen mehrerer Maxima das größte Maximum der Schmelzpunktsverteilungskurve angegeben (Bestimmung gemäß DIN EN ISO 11357-3). Die Fettsäurevinylester-Copolymere haben im Allgemeinen keinen einheitlichen Schmelzpunkt, sondern sind durch eine breite Schmelzpunktsverteilungskurve charakterisiert; d.h. für wesentliche Anteile der Fettsäurevinylester-Copolymere erfolgt der Schmelzvorgang über einen breiten Temperaturbereich. Eine solche Schmelzpunktsverteilungskurve ist zur Lösung der erfindungsgemäßen Aufgabe vorteilhaft.

Die Bestimmung der Schmelzenthalpie erfolgt wie in DIN EN ISO 11357-3 beschrieben. Gemäß DIN EN ISO 11357-3 wird die Schmelzenthalpie als Fläche zwischen der Basislinie und der Kurve des Schmelzenthalpieverteilungs-Diagramms erhalten; oder anders ausgedrückt, ergibt sich die Schmelzenthalpie durch Integrieren über die Schmelzenthalpieverteilungskurve. Vorzugsweise liegen im Bereich von 2°C unterhalb des Schmelzpunkts bis 2°C oberhalb des Schmelzpunkts 5% bis 35%, besonders bevorzugt 5% bis 30% und am meisten bevorzugt 5% bis 25% der Schmelzenthalpie. Vorzugsweise liegen im Bereich 4°C unterhalb des Schmelzpunkts bis 4°C oberhalb des Schmelzpunkts 10% bis 70%, besonders bevorzugt 10% bis 50% und am meisten bevorzugt 10% bis 40% der Schmelzenthalpie. Vorzugsweise liegen im Bereich von 8°C unterhalb des Schmelzpunkts bis 8°C oberhalb des Schmelzpunkts 30% bis 85%, besonders bevorzugt 30% bis 75% und am meisten bevorzugt 30% bis 65% der Schmelzenthalpie.

Vorzugsweise liegen 95% bis 65%, besonders bevorzugt 95% bis 70% und am meisten bevorzugt 95% bis 75% der Schmelzenthalpie der Fettsäurevinylester-Copolymere in einen Temperaturbereich, der um mehr als 2°C vom Schmelzpunkt der Fettsäurevinylester-Copolymere abweicht. Vorzugsweise liegen 90% bis 30%, besonders bevorzugt 90% bis 50% am meisten bevorzugt 90% bis 60% der Schmelzenthalpie der Fettsäurevinylester-Copolymere in einem Temperaturbereich, der um mehr als 4°C vom Schmelzpunkt der Fettsäurevinylester-Copolymere abweicht. Vorzugsweise liegen 70% bis 15%, besonders bevorzugt 70% bis 25% und am meisten bevorzugt 70% bis 35% der Schmelzenthalpie der Fettsäurevinylester-Copolymere in einem Temperaturbereich, der um mehr als 8°C vom Schmelzpunkt der Fettsäurevinylester-Copolymere abweicht.

Das gewichtsmittlere Molekulargewicht Mw der Fettsäurevinylester-Copolymere liegt bevorzugt im Bereich ≥ 5.000 g/mol, besonders bevorzugt 5.000 g/mol bis 35.000 g/mol (Bestimmung mittels Size Exclusion Chromatography (SEC) gegen Polystyrol-Standard, in THF, bei 35°C, Flow Rate 0,5 ml/min und Detektion mit RI (Brechungsindex-Detektor) auf einer Resipore Säule von Agilent (Injektionsvolumen von 10 µl)).

Die Fettsäurevinylester-Copolymere liegen vorzugsweise in Form von Festharzen vor. Festharze sind im Allgemeinen nicht durch Emulgatoren oder Schutzkolloide stabilisiert und dementsprechend keine in Wasser redispergierbaren Pulver. Die Festharze bestehen im Allgemeinen im Wesentlichen ausschließlich aus den Fettsäurevinylester-Copolymeren.

Ein weiterer Gegenstand der Erfindung sind Fettsäurevinylester-Copolymer-Zusammensetzungen basierend auf erfindungsgemäßen Fettsäurevinylester-Copolymeren, mit der Maßgabe, dass ≤ 30 Gew.-%, bezogen auf das Trockengewicht der Fettsäurevinylester-Copolymer-Zusammensetzungen, an Fettsäurevinylester-Copolymeren enthalten sind, die auf ≥ 90 Gew.-% an Vinylestern a), bezogen auf das Gewicht der Fettsäurevinylester-Copolymere, basieren.

In Folge der erfindungsgemäßen Dosierung der Vinylester a) bzw. b) kann der Anteil von Homopolymeren der Vinylester a) bzw. b) in den Copolymer-Zusammensetzungen gezielt und zudem sehr niedrig eingestellt werden. Die Bildung von Homopolymeren kann sogar ganz ausgeschlossen werden. Homopolymere umfassen in diesem Zusammenhang auch Copolymere, die im Wesentlichen auf einer einzigen Monomersorte basieren. Auf Grund dieser erfindungsgemäßen Dosierung werden Copolymer-Zusammensetzungen zugänglich, die unterschiedlichste Fettsäurevinylester-Copolymere mit unterschiedlichen Einbauraten an Vinylestern a) und b) enthalten. Dies ist für die Wachseigenschaften der Copolymer-Zusammensetzungen vorteilhaft.

Bevorzugt sind Fettsäurevinylester-Copolymer-Zusammensetzungen, die ≤ 20 Gew.-%, insbesondere ≤ 10 Gew.-%, bezogen auf das Trockengewicht der Fettsäurevinylester-Copolymer-Zusammensetzungen, an Fettsäurevinylester-Copolymeren enthalten, die auf ≥ 95 Gew.-%, insbesondere ≥ 99 Gew.-% an Vinylestern a), bezogen auf das Gewicht der Fettsäurevinylester-Copolymere, basieren.

Bevorzugt sind auch Fettsäurevinylester-Copolymer-Zusammensetzungen, die ≤ 30 Gew.-%, insbesondere ≤ 20 Gew.-%, mehr bevorzugt ≤ 10 Gew.-%, bezogen auf das Trockengewicht der Fettsäurevinylester-Copolymer-Zusammensetzungen, an Fettsäurevinylester-Copolymeren enthalten, die auf ≥ 90 Gew.-%, insbesondere ≥ 95 Gew.-%, mehr bevorzugt ≥ 99 Gew.-% an Vinylestern b), bezogen auf das Gewicht der Fettsäurevinylester-Copolymere, basieren.

Die Fettsäurevinylester-Copolymere eignen sich beispielsweise zur Verwendung in Beschichtungsmitteln, insbesondere in Wachs-Zusammensetzungen, beispielsweise zur Herstellung von Lebensmittelbeschichtungen. Wachs-Zusammensetzungen enthalten ein oder mehrere Fettsäurevinylester-Copolymere und beispielsweise Verdickungsmittel, Weichmacher, Tenside, antimikrobielle Substanzen, Antioxidantien oder Füllstoffe.

Weitere Anwendungsgebiete sind der Einsatz der Fettsäurevinylester-Copolymere als Grundstoffe im Kosmetik- oder pharmazeutischen Bereich, in der Papierindustrie oder im Textilbereich. Die Fettsäurevinylester-Copolymere können auch als Wachsersatz in Kaugummirohmassen dienen. Als Gleitmittel, Verdicker, Schmiermittel oder zur Oberflächenhydrophobierung können die Fettsäurevinylester-Copolymere auch eingesetzt werden.

Überraschenderweise neigen die erfindungsgemäßen Fettsäurevinylester-Copolymere nicht zur Entmischung oder Domänenbildung. Die Fettsäurevinylester-Copolymere zeigen wachsartige Eigenschaften und ergeben nach Applikation in Beschichtungsmitteln Beschichtungen, die nicht zur Versprödung oder Bildung von klebrigen Oberflächen neigen. Zudem sind die Fettsäurevinylester-Copolymere nach einfachen Verfahren unter Einsatz von etabliertem Equipment zugänglich. Damit eignen sich die Fettsäurevinylester-Copolymere bestens zur Substitution von Paraffin-Wachsen.

Die nachfolgenden Beispiele dienen zur weiteren Erläuterung der Erfindung:

### Allgemeine Arbeitsvorschriften:

### Herstellung von Glas-Beschichtungen:

Durch Ausgießen von 5 g Polymerschmelze (60°C) auf eine glatte Glasfläche wurde eine 1 bis 2 mm dicke Beschichtung hergestellt und auf Raumtemperatur abgekühlt.

### Herstellung von Käsebeschichtungen:

Eine Käseprobe (Babybel®) wurde in eine Polymerschmelze (60°C) eingetaucht, anschließend ließ man abtropfen und abkühlen auf Raumtemperatur. Auf diese Weise wurden beschichtete Käseproben erhalten, bei denen 20 g Käse mit 4 g Polymer beschichtet waren.

### DSC-Messung:

DSC-Messungen und Auswertungen erfolgen entsprechend DIN EN ISO 11357 - 3 mit dem Gerät DSC 1 von Mettler-Toledo, Modul-Typ: DSC1/500 (Modulname: DSC1_1448)): Probeneinwaage: 8,5 mg, Temperaturbereich -70 bis 150°C, Heiz-/Kühlrate 10K/Min; gemessen wurden 2 Durchläufe (1 Heiz- und Kühlzyklus je Durchlauf: -70°C (10K/min) bis 150°C, 150°C (10K/min) bis -70°C); für die Auswertung wurde jeweils der 2. Lauf verwendet.

### Nadelpenetrationsmessung:

Messung gemäß ASTM D1321-10. Messgerät: digitales halbautomatisches Penetrometer der Fa. Coesfeld (Kegelnadel 2,5 g gemäß D1321 aus gehärtetem Stahl, Fallstab 47,5 g, Zusatzgewicht 100 g). Es wurden jeweils 100 g Probekörper eingesetzt und die Messung erfolgte über 5 Sekunden. Die Messtemperatur ist für die jeweilige Messung angegeben.

Erstarrungstemperatur (Congealing Point):
Bestimmung gemäß ASTM D938-12.

### Bestimmung von Restmonomergehalten:

Die Restmonomergehalte wurden mittels 1H-NMR (Lösemittel: CDCl₃, TMS Standard 0 ppm) bestimmt. Das Integral des Triplettsignals bei 0,8 ppm wurde bei der Integration auf 300 normiert. Das relative Integral des Restmonomersignals bei 4,5 ppm ergab den Restmonomergehalt in Stoffmengenprozent.

### Herstellung der Fettsäurevinylester-Copolymere

### Beispiel 1 (Bsp.1):

### Vorbereitung der Dosierung 1 (Vinylstearat-Lösung):

150,0 g Vinylstearat wurden in einen 250 ml Schlenkkolben gegeben, bei 50°C geschmolzen und für 15 Minuten unter vermindertem Druck (2,3 x 10⁻¹ mbar) entgast. Unter Argonatmosphäre wurden 60 g Isopropanol zugesetzt.

### Vorbereitung der Dosierung 2 (Vinyllaurat-Lösung):

In einen weiteren 250 ml Schlenkkolben wurden 100,0 g Vinyllaurat gegeben und dieser bei Raumtemperatur für 15 Minuten unter vermindertem Druck (2,3 x 10⁻¹ mbar) entgast. Unter Argonatmosphäre wurden 60 g Isopropanol zugesetzt.

### Vorbereitung der Dosierung 3 (Initiator-Lösung):

In einen 100 ml Schlenkkolben wurden 60 g Isopropanol und 3,2 g tert-Butylperoxypivalat (75%ige wässrige Lösung) unter Argongegenstrom geben.

### Durchführung der Polymerisation:

Ein 1000 ml-Fünfhalskolben wurde auf 80°C erwärmt und in diesen unter Argonatmosphäre 40,0 g Isopropanol und 0,8 g tert-Butylperoxypivalatlösung (75%ige wässrige Lösung) gegeben (Vorlage).
Nach 2 Minuten wurden zeitgleich die Dosierungen 1, 2 und 3 gestartet.
Die Initiator-Lösung (Dosierung 3) wurde mit einer Ismatec IPC Schlauchpumpe mit einer Dosiergeschwindigkeit von 0,5 g/min über zwei Stunden hinweg kontinuierlich dosiert.
Die Vinylstearatlösung (Dosierung 1) wurde mit einer Ismatec Schlauchpumpe mit absteigender Geschwindigkeit dosiert, dabei wurden die Schläuche unter einer 250 W IR-Lampe auf 40°C temperiert. Die Zugabe von Dosierung 1 erfolgte nach folgendem Dosierschema: zuerst für 10 Min mit 4,4 g/min, danach für 10 Min mit 3,6 g/min, danach für 10 Min mit 2,8 g/min, danach für 10 Min mit 2,4 g/min und schließlich für 80 Min mit 1,0 g/min. Die Vinyllauratlösung (Dosierung 2) wurde über eine Schlauchpumpe mit aufsteigender Geschwindigkeit dosiert. Die Zugabe von Dosierung 2 erfolgte nach folgendem Dosierschema: zuerst für 10 Min mit 1,6 g/min, danach für 10 Min mit 2,4 g/min, danach für 10 Min mit 2,8 g/min, danach für 10 Min mit 3,6 g/min und schließlich für 13 Min mit 4,4 g/min.
Anschließend wurde das Lösemittel unter vermindertem Druck (2,3 x 10⁻¹ mbar) entfernt. Man erhielt das Fettsäurevinylester-Copolymer in Form eines farblosen Feststoffes (Restmonomergehalt < 1%).

### Analytische Daten:

Molekulargewicht: Mn = 3300 g/mol; Mw = 6600 g/mol.
DSC: Schmelztemperatur: 30,7°C, Schmelzenthalpie 51,7 J/g (untere Peakbegrenzung: -8,4°C, obere Peakbegrenzung: 44,5°C).

Schmelzenthalpie im Temperaturbereich +/- 2°C von der Schmelztemperatur: 9,5 J/g, was 19% der Schmelzenthalpie des gesamten Schmelzpeaks entspricht. Der Ausdruck +/- 2°C von der Schmelztemperatur bezeichnet den Bereich von 2°C unterhalb der Schmelztemperatur bis 2°C oberhalb der Schmelztemperatur und wird im Folgenden analog verwendet.

Schmelzenthalpie im Temperaturbereich +/- 4°C von der Schmelztemperatur: 18,3 J/g, was 35% der Schmelzenthalpie des gesamten Schmelzpeaks entspricht.
Schmelzenthalpie im Temperaturbereich +/- 8°C von der Schmelztemperatur: 31,6 J/g, was 61% der Schmelzenthalpie des gesamten Schmelzpeaks entspricht.

### Nadelpenetrationsmessungen:

bei Probekörpertemperatur von 22°C: 7,8 mm;
bei Probekörpertemperatur von 10°C: 3,0 mm.
Erstarrungstemperatur (Congealing Point): 43°C.
Glas-Beschichtung: Homogene Beschichtung.

### Käsebeschichtung:

Homogene Beschichtung, wenig temperatursensitiv. Nicht klebrig beim Halten in der Hand.
Keine Sprödigkeit, keine Oberflächenklebrigkeit.

### Vergleichsbeispiel 2 (VBsp.2): statistisches Copolymer:

In einen 250 ml-Dreihalskolben wurden 40 g Vinyllaurat und 60 g Vinylstearat vorgelegt. Die Monomermischung wurde auf 50°C aufgeheizt und für 15 min unter vermindertem Druck (2,3x 10-1mbar) entgast. Unter Argongegenstrom wurden 25 g Isopropanol und 0,3 g tert. Butylperoxypivalatlösung (75%ige Lösung in Wasser) zugegeben. Der Ansatz wurde auf 80°C erwärmt (Rückflussbedingungen). Bei Erreichen von 80°C wurden über einen 50 ml-Tropftrichter weitere 25 g Isopropanol zusammen mit 0,570 g tert.Butylperoxypivalat über 30 Minuten zugetropft. Der Reaktionsansatz wurde anschließend für 2 h bei 80°C gehalten. Anschließend wurde das Lösemittel Isopropanol bei vermindertem Druck (2,3x 10⁻¹ mbar) und 95°C entfernt.
Es wurde ein statistisches Copolymer in Form eines farblosen Feststoffes erhalten (Restmonomergehalt < 1%).

### Analytische Daten:

Molekulargewicht: Mn= 10719 g/mol; Mw= 27874 g/mol.
DSC: Schmelztemperatur: 28,5°C, Schmelzenthalpie 46,4 J/g (untere Peakbegrenzung: -1,3°C, obere Peakbegrenzung: 38,0°C).

Schmelzenthalpie im Temperaturbereich +/- 2°C von der Schmelztemperatur: 18,1 J/g, was 39% der Schmelzenthalpie des gesamten Schmelzpeaks entspricht.
Schmelzenthalpie im Temperaturbereich +/- 4°C von der Schmelztemperatur: 30,3 J/g, was 65% der Schmelzenthalpie des gesamten Schmelzpeaks entspricht.
Schmelzenthalpie im Temperaturbereich +/- 8°C von der Schmelztemperatur: 39,8 J/g, was 85,8% der Schmelzenthalpie des gesamten Schmelzpeaks entspricht.

### Nadelpenetrationsmessung:

bei Probekörpertemperatur 22°C: 6,5 mm;
bei Probekörpertemperatur 10°C: 1,5 mm.
Erstarrungstemperatur (Congealing Point): 36°C.
Glas-Beschichtung: Homogene Beschichtung.

### Käsebeschichtung:

Homogene Beschichtung, aber sehr temperatursensitiv; wurde sehr klebrig beim Halten in der Hand (durch die Handtemperatur Schmelzen erheblich Teile).

Bei gleicher Monomer-Zusammensetzung wie Beispiel 1 weist Vergleichsbeispiel 2 einen deutlich engeren Schmelzbereich auf. 65% der gesamten Schmelzenthalpie lagen in einem Temperaturfenster +/-4°C, während bei Beispiel 1 lediglich 35% der Schmelzenthalpie in einem Temperaturfenster +/-4°C lagen. Das Produkt von Vergleichsbeispiel 2 war bei Raumtemperatur härter und damit spröder und reagierte deutlich sensitiver auf Temperaturänderungen (der Schmelz-/Kristallisations-Vorgang lag in einem engen Temperaturbereich). So wurde es bei Temperaturerniedrigung sehr spröde (siehe Nadelpenetrationsmessung bei 10°C: 1,5 mm) und bildete bei Temperaturerhöhung schlagartig klebrige Oberflächen und wurde bei weiterer Temperaturerhöhung flüssig (Erstarrungstemperatur 36°C).

### Vergleichsbeispiel 3 (VBsp.3):

Polymerabmischung aus 40 Gew.-% Vinyllaurat-Homopolymer und 60 Gew.-% Vinylstearat-Homopolymer.

### Herstellung des Vinyllaurat-Homopolymers:

In einen 250 ml-Dreihalskolben wurden 100 g Vinyllaurat vorgelegt, auf 50°C aufgeheizt und für 15 min unter vermindertem Druck (2,3x 10⁻¹mbar) entgast. Daraufhin wurden in einem Schuss unter Argongegenstrom 25 g Isopropanol und 0,3 g tert.Butylperoxypivalat (75%ige Lösung in Wasser) zugegeben. Der Ansatz wurde auf 80°C Reaktionstemperatur aufgeheizt (Rückfluss). Bei Erreichen von 80°C wurden über einen 50 ml-Tropftrichter weitere 25 g Isopropanol zusammen mit 0,7 g tert.Butylperoxypivalat über 45 Minuten zugetropft. Anschließend wurde für 2 h bei 80°C gehalten. Danach wurde das Lösemittel Isopropanol bei vermindertem Druck (2,3x 10⁻¹ mbar) und 95°C entfernt. Es wurde eine trübe, hochviskose Flüssigkeit erhalten (Restmonomergehalt < 1%).
Molekulargewicht: Mn= 12828 g/mol; Mw= 32280 g/mol.

### Herstellung des Vinylstearat-Homopolymers:

In einen 250 ml-Dreihalskolben wurden 100 g Vinylstearat vorgelegt, auf 50°C aufgeheizt und für 15 min unter vermindertem Druck (2,3x 10⁻¹ mbar) entgast. Daraufhin wurden in einem Schuss unter Argongegenstrom 25 g Isopropanol und 0,28 g tert.Butylperoxypivalat (75%ige Lösung in Wasser) zugegeben. Der Ansatz wurde auf 80°C Reaktionstemperatur aufgeheizt (Rückfluss). Bei Erreichen von 80°C wurden über einen 50 ml-Tropftrichter weitere 25 g Isopropanol zusammen mit 0,45 g tert.Butylperoxypivalat über 30 Minuten zugetropft. Anschließend wurde für 2 h bei 80°C gehalten. Danach wurde das Lösemittel Isopropanol bei vermindertem Druck (2,3x 10⁻¹mbar) und 95°C entfernt. Es wurde ein farbloser Feststoff erhalten. Molekulargewicht: Mn= 15170g/mol; Mw= 29427g/mol.

### Abmischen der beiden Homopolymere:

20 g des oben beschriebenen Vinyllaurat-Homopolymers und 30 g des oben beschriebenen Vinylstearat-Homopolymers wurden in ein 50 ml Gläschen eingewogen und durch Rühren bei 60°C als Schmelze homogen vermischt.
DSC: Schmelzdiagramm: zwei Basislinie getrennte Schmelzbereiche, zwei Schmelzpeaks:
   Schmelzpeak 1:
      Schmelztemperatur: 53,6°C, Schmelzenthalpie: 53,0 J/g (untere Peakbegrenzung 11,6°C, obere Peakbegrenzung 61,8°C);
   Schmelzpeak 2:
      Schmelztemperatur: -2,56°C, Schmelzenthalpie: 10,7 J/g.

Schmelzenthalpie im Temperaturbereich +/- 2°C von der Schmelztemperatur: 33,5 J/g, was 62% der Schmelzenthalpie des gesamten Schmelzpeaks entspricht.
Schmelzenthalpie im Temperaturbereich +/- 4°C von der Schmelztemperatur: 41,8 J/g, was 78% der Schmelzenthalpie des gesamten Schmelzpeaks entspricht.
Schmelzenthalpie im Temperaturbereich +/- 8°C von der Schmelztemperatur: 47,7 J/g, was 89,0% der Schmelzenthalpie des gesamten Schmelzpeaks entspricht.

### Nadelpenetrationsmessung:

bei Probekörpertemperatur 22°C; 3,9 mm;
bei Probekörpertemperatur 10°C: 3,4 mm.

Glas-Beschichtung: Rissbildung.
Käsebeschichtung: Rissbildung.
   Die Beschichtungen waren brüchig, spröde und wiesen zudem eine hohe Oberflächenklebrigkeit auf. Auch waren die unterschiedlichen Bestandteile der Beschichtungen miteinander unverträglich.

### Vergleichsbeispiel 4 (VBsp.4): zweistufige Homopolymerisation:

In einen 500 ml-Dreihalskolben wurden 100 g Vinylstearat vorgelegt, auf 50°C aufgeheizt und für 15 min unter vermindertem Druck (2,3x 10⁻¹ mbar) entgast. Daraufhin wurden in einem Schuss unter Argongegenstrom 0,28 g tert. Butylperoxypivalat (75%ige Lösung in Wasser) zugegeben. Der Ansatz wurde auf 80°C Reaktionstemperatur aufgeheizt (Rückfluss). Bei Erreichen von 80°C wurden weitere 0,45 g tert.Butylperoxypivalat über 30 Minuten zugetropft. Bei Erreichen von 10% Restmonomergehalt (Stoffmenge Vinylstearat entsprach 10% des Ausgangswertes) wurden 40 g entgastes Vinyllaurat in einem Schuss unter Argonatmosphäre zugegeben. Es wurde so lange tert.Butylperoxypivalat nachdosiert, bis der Restmonomergehalt weniger als 1% betrug. Es wurde ein farbloser Feststoff erhalten.
DSC: Schmelzdiagramm: zwei Basislinie getrennte Schmelzbereiche, zwei Schmelzpeaks:
   Schmelzpeak 1:
      Schmelztemperatur: 51,6°C, Schmelzenthalpie: 44,1 J/g (untere Peakbegrenzung 20,7°C, obere Peakbegrenzung 58,6°C);
   Schmelzpeak 2:
      Schmelztemperatur: -1,3°C, Schmelzenthalpie: 9,5 J/g.

Schmelzenthalpie im Temperaturbereich +/- 2°C von der Schmelztemperatur: 26,0 J/g, was 44% der Schmelzenthalpie des gesamten Schmelzpeaks entspricht.
Schmelzenthalpie im Temperaturbereich +/- 4°C von der Schmelztemperatur: 34,1 J/g, was 77% der Schmelzenthalpie des gesamten Schmelzpeaks entspricht.
Schmelzenthalpie im Temperaturbereich +/- 8°C von der Schmelztemperatur: 39,6 J/g, was 90,0% der Schmelzenthalpie des gesamten Schmelzpeaks entspricht.

### Nadelpenetrationsmessung:

bei Probekörpertemperatur 22°C: 5,4 mm;
bei Probekörpertemperatur 10°C: 3,4 mm.
Glas-Beschichtung: Rissbildung;
Käsebeschichtung: Rissbildung.
Das Schmelz- und Beschichtungsverhalten des so erhaltenen Polymers entsprach Vergleichsbeispiel 3.

## Patentansprüche

1. Verfahren zur Herstellung von Fettsäurevinylester-Copolymeren durch radikalisch initiierte Polymerisation von
a) einem oder mehreren Vinylestern von Carbonsäuren mit 16 bis 22 Kohlenstoffatomen und
b) einem oder mehreren Vinylestern von Carbonsäuren mit 2 bis 15 Kohlenstoffatomen,
wobei ein oder mehrere Vinylester a) und ein oder mehrere Vinylester b) während der Polymerisation zudosiert werden, **dadurch gekennzeichnet, dass**
während der Polymerisation entweder die Dosierrate von Vinylester a) oder die Dosierrate von Vinylester b) verringert wird und die Dosierrate des anderen der beiden Vinylester a) oder b) erhöht wird.

2. Verfahren zur Herstellung von Fettsäurevinylester-Copolymeren nach Anspruch 1, **dadurch gekennzeichnet, dass** ein oder mehrere Vinylester a) von Carbonsäuren ausgewählt aus der Gruppe umfassend Palmitinsäure, Stearinsäure, Margarinsäure, Arachinsäure und Behensäure und/oder ein oder mehrere Vinylester b) ausgewählt aus der Gruppe umfassend Vinylacetat, Vinylpropionat, Vinylbutyrat, 1-Methylvinylacetat, Vinylpivalat, Vinyllaurat, Vinylneodecanoat und Vinylester von α-verzweigten Monocarbonsäuren mit 9 bis 11 C-Atomen eingesetzt werden.

3. Verfahren zur Herstellung von Fettsäurevinylester-Copolymeren nach Anspruch 1 oder 2, **dadurch gekennzeichnet, dass** die Vinylester a) zu 20 bis 90 Gew.-% und/oder die Vinylester b) zu 10 bis 80 Gew.-% eingesetzt werden, jeweils bezogen auf die Gesamtmasse der insgesamt zur Herstellung der Fettsäurevinylester-Copolymere eingesetzten ethylenisch ungesättigten Monomere.

4. Verfahren zur Herstellung von Fettsäurevinylester-Copolymeren nach Anspruch 1 bis 3, **dadurch gekennzeichnet, dass** das Zudosieren der Vinylester a) und/oder Vinylester b) kontinuierlich erfolgt.

5. Verfahren zur Herstellung von Fettsäurevinylester-Copolymeren nach Anspruch 1 bis 4, **dadurch gekennzeichnet, dass**
15 bis 50 Gew.-% der insgesamt eingesetzten Vinylester V1) bis zu dem Zeitpunkt zudosiert, zu dem 1 bis 10 Gew.-% der insgesamt eingesetzten Vinylester V2) zudosiert sind;
und/oder
30 bis 70 Gew.-% der insgesamt eingesetzten Vinylester V1) bis zu dem Zeitpunkt zudosiert, zu dem 20 bis 30 Gew.-% insgesamt eingesetzten Vinylester V2) zudosiert sind;
und/oder
40 bis 80 Gew.-% der insgesamt eingesetzten Vinylester V1) bis zu dem Zeitpunkt zudosiert, zu dem 40 bis 60 Gew.-% insgesamt eingesetzten Vinylester V2) zudosiert sind;
und/oder
50 bis 80 Gew.-% der insgesamt eingesetzten Vinylester V1) bis zu dem Zeitpunkt zudosiert, zu dem 60 bis 70 Gew.-% der insgesamt eingesetzten Vinylester V2) zudosiert sind, wobei Vinylester V1 für den Vinylester a) oder b) steht, dessen Dosierrate während der Polymerisation verringert wird, und
Vinylester V2 für den Vinylester a) oder b) steht, dessen Dosierrate während der Polymerisation erhöht wird.

6. Verfahren zur Herstellung von Fettsäurevinylester-Copolymeren nach Anspruch 1 bis 5, **dadurch gekennzeichnet, dass**
70 bis 100 Gew.-% der insgesamt eingesetzten Vinylester V1) zudosiert werden, während Vinylester V2) zudosiert werden, und/oder
80 bis 100 Gew.-% der insgesamt eingesetzten Vinylester V2) zudosiert werden, während Vinylester V1) zudosiert werden
wobei Vinylester V1 für den Vinylester a) oder b) steht, dessen Dosierrate während der Polymerisation verringert wird, und
Vinylester V2 für den Vinylester a) oder b) steht, dessen Dosierrate während der Polymerisation erhöht wird.

7. Verfahren zur Herstellung von Fettsäurevinylester-Copolymeren nach Anspruch 5 bis 6, **dadurch gekennzeichnet, dass** Vinylester V1) für den Vinylester a) und Vinylester V2) für den Vinylester b) steht.

8. Fettsäurevinylester-Copolymere, **dadurch gekennzeichnet, dass** die Fettsäurevinylester-Copolymere nach den Verfahren der Ansprüche 1 bis 7 erhältlich sind.

9. Fettsäurevinylester-Copolymere nach Anspruch 8, **dadurch gekennzeichnet, dass** der Schmelzpunkt und die Schmelzenthalpie der Fettsäurevinylester-Copolymere eine oder mehrere der folgenden Maßgaben a) bis c) erfüllen:
a) im Bereich von 2°C unterhalb des Schmelzpunkts bis 2°C oberhalb des Schmelzpunkts liegen 5% bis 35% Schmelzenthalpie;
b) im Bereich 4°C unterhalb des Schmelzpunkts bis 4°C oberhalb des Schmelzpunkts 10% bis 70% liegen der Schmelzenthalpie;
c) im Bereich von 8°C unterhalb des Schmelzpunkts bis 8°C oberhalb des Schmelzpunkts 30% bis 85% liegen der Schmelzenthalpie,
wobei der Schmelzpunkt und die Schmelzenthalpie gemäß DIN EN ISO 11357-3 bestimmt werden.

10. Fettsäurevinylester-Copolymere nach Anspruch 8 oder 9, **dadurch gekennzeichnet, dass** der Schmelzpunkt und die Schmelzenthalpie der Fettsäurevinylester-Copolymere eine oder mehrere der folgenden Maßgaben a) bis c) erfüllen:
a) 95% bis 65% der Schmelzenthalpie der Fettsäurevinylester-Copolymere liegen in einen Temperaturbereich, der um mehr als 2°C vom Schmelzpunkt der Fettsäurevinylester-Copolymere abweicht;
b) 90% bis 30% der Schmelzenthalpie der Fettsäurevinylester-Copolymere liegen in einem Temperaturbereich, der um mehr als 4°C vom Schmelzpunkt der Fettsäurevinylester-Copolymere abweicht;
c) 70% bis 15% der Schmelzenthalpie der Fettsäurevinylester-Copolymere liegen in einem Temperaturbereich, der um mehr als 8°C vom Schmelzpunkt der Fettsäurevinylester-Copolymere abweicht;
wobei der Schmelzpunkt und die Schmelzenthalpie gemäß DIN EN ISO 11357-3 bestimmt werden.

11. Fettsäurevinylester-Copolymer-Zusammensetzungen basierend auf Fettsäurevinylester-Copolymeren gemäß Anspruch 8 bis 10, mit der Maßgabe, dass
≤ 30 Gew.-%, bezogen auf das Trockengewicht der Fettsäurevinylester-Copolymer-Zusammensetzungen, an Fettsäurevinylester-Copolymeren enthalten sind, die auf ≥ 90 Gew.-% an Vinylestern a), bezogen auf das Gewicht der Fettsäurevinylester-Copolymere, basieren.

12. Verwendung der Fettsäurevinylester-Copolymere oder der Fettsäurevinylester-Copolymer-Zusammensetzungen aus den Ansprüchen 8 bis 11 in Beschichtungsmitteln, insbesondere in Wachs-Zusammensetzungen, beispielsweise zur Herstellung von Lebensmittelbeschichtungen.

13. Verwendung der Fettsäurevinylester-Copolymere oder der Fettsäurevinylester-Copolymer-Zusammensetzungen aus den Ansprüchen 8 bis 11 als Zusatzstoffe für kosmetische oder pharmazeutische Produkte, für Papierbeschichtungsmassen, als Wachsersatz in Kaugummirohmassen oder als Gleitmittel, Verdicker, Schmiermittel oder zur Oberflächenhydrophobierung.

## Claims

1. Method for preparing fatty acid vinyl ester copolymers by free-radical initiated polymerization of
a) one or more vinyl esters of carboxylic acids having 16 to 22 carbon atoms and
b) one or more vinyl esters of carboxylic acids having 2 to 15 carbon atoms,
wherein one or more vinyl esters a) and one or more vinyl esters b) are metered in during the polymerization, **characterized in that** during the polymerization either the metered addition rate of vinyl ester a) or the metered addition rate of vinyl ester b) is reduced and the metered addition rate of the other of the two vinyl esters a) or b) is increased.

2. Method for preparing fatty acid vinyl ester copolymers according to Claim 1, **characterized in that** one or more vinyl esters a) of carboxylic acids selected from the group comprising palmitic acid, stearic acid, margaric acid, arachidic acid and behenic acid and/or one or more vinyl esters b) selected from the group comprising vinyl acetate, vinyl propionate, vinyl butyrate, 1-methylvinyl acetate, vinyl pivalate, vinyl laurate, vinyl neodecanoate and vinyl esters of α-branched monocarboxylic acids having 9 to 11 carbon atoms are used.

3. Method for preparing fatty acid vinyl ester copolymers according to Claim 1 or 2, **characterized in that** the vinyl esters a) are used from 20 to 90% by weight and/or the vinyl esters b) are used from 10 to 80% by weight, based in each case on the total mass of the sum total of ethylenically unsaturated monomers used for preparing the fatty acid vinyl ester copolymers.

4. Method for preparing fatty acid vinyl ester copolymers according to Claim 1 to 3, **characterized in that** the metered addition of the vinyl esters a) and/or vinyl esters b) is carried out continuously.

5. Method for preparing fatty acid vinyl ester copolymers according to Claim 1 to 4, **characterized in that** 15 to 50% by weight of the total vinyl esters V1) used have been metered in up to the time point at which 1 to 10% of the total vinyl esters V2) used have been metered in; and/or
30 to 70% by weight of the total vinyl esters V1) used have been metered in up to the time point at which 20 to 30% by weight of the total vinyl esters V2) used have been metered in; and/or
40 to 80% by weight of the total vinyl esters V1) used have been metered in up to the time point at which 40 to 60% by weight of the total vinyl esters V2) used have been metered in; and /or 50 to 80% by weight of the total vinyl esters V1) used have been metered in up to the time point at which 60 to 70% by weight of the total vinyl esters V2) used have been metered in, wherein vinyl ester V1 is the vinyl ester a) or b) whose metered addition rate is reduced during the polymerization, and
vinyl ester V2 is the vinyl ester a) or b) whose metered addition rate is increased during the polymerization.

6. Method for preparing fatty acid vinyl ester copolymers according to Claim 1 to 5, **characterized in that** 70 to 100% by weight of the total vinyl esters V1) used are metered in while vinyl esters V2) are metered in, and/or
80 to 100% by weight of the total vinyl esters V2) used are metered in while vinyl esters V1) are metered in
wherein vinyl ester V1 is the vinyl ester a) or b) whose metered addition rate is reduced during the polymerization, and
vinyl ester V2 is the vinyl ester a) or b) whose metered addition rate is increased during the polymerization.

7. Method for preparing fatty acid vinyl ester copolymers according to Claim 5 to 6, **characterized in that** vinyl ester V1) is the vinyl ester a) and vinyl ester V2) is the vinyl ester b) .

8. Fatty acid vinyl ester copolymer **characterized in that** the fatty acid vinyl ester copolymers are obtainable by Method of Claims 1 to 7.

9. Fatty acid vinyl ester copolymer according to Claim 8, **characterized in that** the melting point and the enthalpy of fusion of the fatty acid vinyl ester copolymers meet one or more of the following criteria:
a) 5% to 35% of the enthalpy of fusion is in the range from 2°C below the melting point to 2°C above the melting point;
b) 10% to 70% of the enthalpy of fusion is in the range from 4°C below the melting point to 4°C above the melting point;
c) 30% to 85% of the enthalpy of fusion is in the range from 8°C below the melting point to 8°C above the melting point;
where the melting point and the enthalpy of fusion are determined according to DIN EN ISO 11357-3.

10. Fatty acid vinyl ester copolymer according to Claim 8 or 9, **characterized in that** the melting point and the enthalpy of fusion of the fatty acid vinyl ester copolymers meet one or more of the following criteria:
a) 95% to 65% of the enthalpy of fusion of the fatty acid vinyl ester copolymers are in a temperature range which deviates by more than 2°C from the melting point of the fatty acid vinyl ester copolymers;
b) 90% to 30% of the enthalpy of fusion of the fatty acid vinyl ester copolymers are in a temperature range which deviates by more than 4°C from the melting point of the fatty acid vinyl ester copolymers;
c) 70% to 15% of the enthalpy of fusion of the fatty acid vinyl ester copolymers are in a temperature range which deviates by more than 8°C from the melting point of the fatty acid vinyl ester copolymers;
where the melting point and the enthalpy of fusion are determined according to DIN EN ISO 11357-3.

11. Fatty acid vinyl ester copolymer compositions based on fatty acid vinyl ester copolymers according to Claim 8 to 10, with the proviso that ≤ 30% by weight, based on the dry weight of the fatty acid vinyl ester copolymer compositions, of fatty acid vinyl ester copolymers are present, which are based on ≥ 90% by weight of vinyl esters a), based on the weight of the fatty acid vinyl ester copolymers.

12. Use of the fatty acid vinyl ester copolymers or the fatty acid vinyl ester copolymer compositions of Claims 8 to 11 in coating compositions, particularly in wax compositions, for example for preparing food coatings.

13. Use of the fatty acid vinyl ester copolymers or the fatty acid vinyl ester copolymer compositions of Claims 8 to 11 as additives for cosmetic or pharmaceutical products, for paper coating compositions, as wax substitutes in chewing gum raw materials or as lubricants, thickeners, or for hydrophobizing surfaces.

## Revendications

1. Procédé pour la préparation de copolymères d'esters vinyliques d'acides gras par polymérisation initiée par voie radicalaire de
a) un ou plusieurs esters vinyliques d'acides carboxyliques comprenant 16 à 22 atomes de carbone et
b) un ou plusieurs esters vinyliques d'acides carboxyliques comprenant 2 à 15 atomes de carbone,
un ou plusieurs esters vinyliques a) et un ou plusieurs esters vinyliques b) étant ajoutés en dosant pendant la polymérisation, **caractérisé en ce que**, pendant la polymérisation, soit la vitesse de dosage des esters vinyliques a), soit la vitesse de dosage des esters vinyliques b) est diminuée et la vitesse de dosage de l'autre des deux esters vinyliques a) ou b) est augmentée.

2. Procédé pour la préparation de copolymères d'esters vinyliques d'acides gras selon la revendication 1, **caractérisé en ce qu'**on utilise un ou plusieurs esters vinyliques a) d'acides carboxyliques choisis dans le groupe comprenant l'acide palmitique, l'acide stéarique, l'acide margarique, l'acide arachidique et l'acide béhénique et/ou un ou plusieurs esters vinyliques b) choisis dans le groupe comprenant l'acétate de vinyle, le propionate de vinyle, le butyrate de vinyle, l'acétate de 1-méthylvinyle, le pivalate de vinyle, le laurate de vinyle, le néodécanoate de vinyle et les esters vinyliques d'acides monocarboxyliques ramifiés en position α comprenant 9 à 11 atomes de carbone.

3. Procédé pour la préparation de copolymères d'esters vinyliques d'acides gras selon la revendication 1 ou 2, **caractérisé en ce que** les esters vinyliques a) sont utilisés à raison de 20 à 90% en poids et/ou les esters vinyliques b) sont utilisés à raison de 10 à 80% en poids, à chaque fois par rapport à la masse totale des monomères éthyléniquement insaturés utilisés pour la préparation des copolymères d'esters vinyliques d'acides gras.

4. Procédé pour la préparation de copolymères d'esters vinyliques d'acides gras selon la revendication 1 à 3, **caractérisé en ce que** le dosage des esters vinyliques a) et/ou des esters vinyliques b) a lieu en continu.

5. Procédé pour la préparation de copolymères d'esters vinyliques d'acides gras selon la revendication 1 à 4, **caractérisé en ce que** 15 à 50% en poids des esters vinyliques V1) utilisés au total sont dosés jusqu'au moment où 1 à 10% en poids des esters vinyliques V2) utilisés au total sont dosés ; et/ou 30 à 70% en poids des esters vinyliques V1) utilisés au total sont dosés jusqu'au moment où 20 à 30% en poids des esters vinyliques V2) utilisés au total sont dosés ; et/ou 40 à 80% en poids des esters vinyliques V1) utilisés au total sont dosés jusqu'au moment où 40 à 60% en poids des esters vinyliques V2) utilisés au total sont dosés ; et/ou 50 à 80% en poids des esters vinyliques V1) utilisés au total sont dosés jusqu'au moment où 60 à 70% en poids des esters vinyliques V2) utilisés au total sont dosés, l'ester vinylique V1 représentant l'ester vinylique a) ou b) dont la vitesse de dosage est diminuée pendant la polymérisation et l'ester vinylique V2 représentant l'ester vinylique a) ou b) dont la vitesse de dosage est augmentée pendant la polymérisation.

6. Procédé pour la préparation de copolymères d'esters vinyliques d'acides gras selon la revendication 1 à 5, **caractérisé en ce que**
70 à 100% en poids des esters vinyliques V1) utilisés au total sont dosés pendant que les esters vinyliques V2) sont dosés et/ou
80 à 100% en poids des esters vinyliques V2) utilisés au total sont dosés pendant que les esters vinyliques V1) sont dosés et/ou
l'ester vinylique V1 représentant l'ester vinylique a) ou b) dont la vitesse de dosage est diminuée pendant la polymérisation et l'ester vinylique V2 représentant l'ester vinylique a) ou b) dont la vitesse de dosage est augmentée pendant la polymérisation.

7. Procédé pour la préparation de copolymères d'esters vinyliques d'acides gras selon la revendication 5 à 6, **caractérisé en ce que** l'ester vinylique V1) représente l'ester vinylique a) et l'ester vinylique V2) représente l'ester vinylique b).

8. Copolymères d'esters vinyliques d'acides gras, **caractérisés en ce que** les copolymères d'esters vinyliques d'acides gras peuvent être obtenus selon les procédés selon les revendications 1 à 7.

9. Copolymères d'esters vinyliques d'acides gras selon la revendication 8, **caractérisés en ce que** le point de fusion et l'enthalpie de fusion des copolymères d'esters vinyliques d'acides gras sont conformes à l'une ou plusieurs des conditions a) à c) suivantes :
a) 5% à 35% de l'enthalpie de fusion se situent dans la plage de 2°C sous le point de fusion jusqu'à 2°C au-dessus du point de fusion ;
b) 10% à 70% de l'enthalpie de fusion se situent dans la plage de 4°C sous le point de fusion jusqu'à 4°C au-dessus du point de fusion ;
c) 30% à 85% de l'enthalpie de fusion se situent dans la plage de 8°C sous le point de fusion jusqu'à 8°C au-dessus du point de fusion ;
le point de fusion et l'enthalpie de fusion étant déterminés selon la norme DIN EN ISO 11357-3.

10. Copolymères d'esters vinyliques d'acides gras selon la revendication 8 ou 9, **caractérisés en ce que** le point de fusion et l'enthalpie de fusion des copolymères d'esters vinyliques d'acides gras sont conformes à l'une ou plusieurs des conditions a) à c) suivantes :
a) 95% à 65% de l'enthalpie de fusion des copolymères d'esters vinyliques d'acides gras se situent dans une plage de température qui s'écarte de plus de 2°C du point de fusion des copolymères d'esters vinyliques d'acides gras ;
b) 90% à 30% de l'enthalpie de fusion des copolymères d'esters vinyliques d'acides gras se situent dans une plage de température qui s'écarte de plus de 4°C du point de fusion des copolymères d'esters vinyliques d'acides gras ;
c) 70% à 15% de l'enthalpie de fusion des copolymères d'esters vinyliques d'acides gras se situent dans une plage de température qui s'écarte de plus de 8°C du point de fusion des copolymères d'esters vinyliques d'acides gras ;
le point de fusion et l'enthalpie de fusion étant déterminés selon la norme DIN EN ISO 11357-3.

11. Compositions de copolymères d'esters vinyliques d'acides gras à base de copolymères d'esters vinyliques d'acides gras selon la revendication 8 à 10, sous réserve qu'elles contiennent ≤ 30% en poids, par rapport au poids sec des compositions de copolymères d'esters vinyliques d'acides gras, de copolymères d'ester vinyliques d'acides gras, qui sont à base de ≥ 90% en poids d'esters vinyliques a), par rapport au poids des copolymères d'esters vinyliques d'acides gras.

12. Utilisation des copolymères d'esters vinyliques d'acides gras ou des compositions de copolymères d'esters vinyliques d'acides gras des revendications 8 à 11 dans des agents de revêtement, en particulier dans des compositions de cire, par exemple pour la production de revêtements alimentaires.

13. Utilisation des copolymères d'esters vinyliques d'acides gras ou des compositions de copolymères d'esters vinyliques d'acides gras des revendications 8 à 11 comme additifs pour des produits cosmétiques ou pharmaceutiques, pour des masses de revêtement de papier, comme succédané de cire dans des masses brutes de gomme à mâcher ou comme agents de glissement, épaississants, lubrifiants ou pour l'hydrofugation de surfaces.
